# EUROPEAN PATENT APPLICATION

(11) **EP 4 002 267 A1**
(43) Date of publication of application: **25.05.2022**
(21) Application number: 20208574.2
(22) Date of filing: 19.11.2020
(51) Int. Cl.: G06T 7/00, G06T 11/00

(54) **IMAGING METHOD AND SYSTEM FOR GENERATING A DIGITALLY STAINED IMAGE, TRAINING METHOD FOR TRAINING AN ARTIFICIAL INTELLIGENCE SYSTEM, AND NON-TRANSITORY STORAGE MEDIUM**

(71) Applicant: Prospective Instruments GmbH, 8105 Regensdorf (CH)
(72) Inventor: Frick, Klaus, 6822 Satteins (AT); Trémuel, Philipp Gerard, 6714 Nüziders (AT); Krainer, Lukas, 6850 Dornbirn (AT)
(74) Representative: Hepp Wenger Ryffel AG

(57) **Abstract**

In one aspect, the invention concerns an imaging method for generating a digitally stained image (51') of a biological tissue probe (50) from a physical image (50') of an unstained tissue biological tissue probe (50) in which a physical image (50') of a biological tissue probe (50) is obtained by simultaneous multi-modal microscopy (53). In another aspect, the invention pertains to a training method for training an artificial intelligence system to be used in such a method. Moreover, the invention pertains to a system for generating a digitally stained image (51') of a biological tissue probe (50) and/or for training an artificial intelligence system. The system comprises a processing unit for performing at least one of said methods. Furthermore, the invention relates to a non-transitory storage medium containing instructions that, when executed by a computer, causes the computer to perform said methods.

## Description

The present application pertains to digitally staining images of biological tissue probes. More specifically, it pertains to an imaging method for generating a digitally stained image of a biological tissue probe from an unstained biological tissue probe, to a training method for training an artificial intelligence system to be used in such a method, to a system for generating a digitally stained image of a biological tissue probe and/or for training an artificial intelligence system, and to a non-transitory storage medium containing instructions.

The concept of digitally staining images of biological tissue probes as such is known in, for example, from WO 2017/146813 A1. This document discloses methods which include obtaining data comprising an input image of biological cells illuminated with an optical microscopy technique and processing the data using neural networks. The image processing system consists of the stained cell neural network for generating multiple types of virtually stained images and a cell characteristic neural network to process the stained cell image data. Precisely, to extract or generate cell features which characterize the cells.

WO 2019/172901 A1 discloses a machine learning predictor model which is trained to generate a prediction of the appearance of a tissue sample stained with a special stain such as an IHC (immunohistochemistry) stain from an input image that is either unstained or stained with H&E (hematoxylin and eosin). The model can be trained to predict special stain images for a multitude of different tissue types and special stain types.

The methods disclosed in both documents mentioned above use pairs of images which must be precisely aligned with each other. This requires considerable effort and is also practically impossible to achieve. This is due to the fact that imaging the same tissue section requires a lot of effort and even then slight morphological changes are very likely. In many cases, overlying sections are also used, one of which is stained and one of which is not stained; these sections can have considerable morphological differences.

Furthermore, WO 2019/191697 A1 discloses a deep learning-based digital staining method that enables the predation of digitally/virtually-stained microscopic images from labels or stained-free samples based on auto-fluorescent images acquired using a fluorescent microscope.

In the scientific literature, the general concept of digitally staining is discussed, for example, in
- Rivenson, Y., Wang, H., Wei, Z. et al. Virtual histological staining of unlabelled tissue-autofluorescence images via deep learning. Nat Biomed Eng 3, 466-477 (2019). https://doi.org/10.1038/s41551-019-0362-y;
- Rana A, Lowe A, Lithgow M, et al. Use of Deep Learning to Develop and Analyze Computational Hematoxylin and Eosin Staining of Prostate Core Biopsy Images for Tumor Diagnosis. JAMA Netw Open. 2020;3(5):e205111. doi:10.1001/ jamanetworkopen.2020.5111; and
- Navid Borhani, Andrew J. Bower, Stephen A. Boppart, and Demetri Psaltis, "Digital staining through the application of deep neural networks to multi-modal multi-photon microscopy," Biomed. Opt. Express 10, 1339-1350 (2019).

Most references in the prior art use only one single imaging modality in the underlying optical microscopy. In WO 2019/191697 A1, it is mentioned that the method can benefit from various imaging modalities such as fluorescence microscopy, non-linear microscopy etc. However, the systems used in the prior art require a sequential imaging. Therefore, the processing times of the different modalities add up so that the frame rate at which the images can be displayed or further evaluated is rather low. Moreover, the spatial co-registration of different imaging modalities is a major technical difficulty, which is addressed in the aforementioned article of Borhani et al.

It is thus an object of the present application to provide improved methods and systems for generating a digitally stained image in which the disadvantages of the prior art are removed or at least reduced. In particular, the methods and system should allow shorter processing times when different modalities are used, and the frame rate at which the images can be displayed or further evaluated should decrease.

Moreover, the process should not require precisely aligned image pairs for training a tissue staining neural network. Furthermore, the image quality should be improved. In addition, slight differences in the image pairs which might lead to artefacts or changes in the morphology during coloring should be avoided as this would be misleading for a later diagnosis.

In a first aspect, the invention relates to an imaging method for generated a digitally stained image of a biological tissue probe from a physical image of an unstained biological tissue probe. The imaging method comprises the steps of
G1) obtaining a physical image of an unstained biological tissue probe by optical microscopy,
G2) generating a digitally stained image from the physical image by using an artificial intelligence system, wherein the system is trained to predict a digitally stained image obtainable by staining the probe in a physical staining method.

In the above enumeration, the letter "G" denotes the "generating" aspect.

According to the first aspect of the invention, step G1) comprises obtaining the physical image of the unstained probe by simultaneous multi-modal microscopy. In other words, two or more microscopy modalities are used simultaneously in order to obtain the physical image of the unstained probe.

The use of simultaneous multi-modal microscopy allows shorter processing times of the different modalities. Moreover, the frame rate at which the images can be displayed or further evaluated decreases. Furthermore, images from different length scales covering several orders of magnitude may be obtained quickly. In addition, there is no need for a spatial co-registration of different imaging modalities. Furthermore, the process according to the present invention does not require precisely aligned image pairs. This brings about enormous advantages in the area of test image generation and pre-processing, as very complex and computationally expensive image registration algorithms can be avoided. Furthermore, the image quality is improved since images obtained by multi-modal microscopy contain more information than those obtained by conventional microscopy. In addition, misleading artefacts or changes in the morphology during physical coloring can be avoided.

It has already been established in some prior-art studies that H&E staining using autofluorescence images is possible. However, it is presently expected that the quality of the staining improves with the increase in image information. This increase in image information is achieved by using multi-modal imaging methods in accordance with the present invention. It is already visible to the human eye that certain modalities do not contain important information for H&E staining. With regard to immunohistochemistry, which is based on the antigen-antibody reaction, the use of additional imaging modalities will lead to a better quality of staining - especially considering the multitude of different marker types which are also constantly evolving. Fast intra-cellular and cellular level metabolic processes can be better visualized and quantified by obtaining a simultaneous multi-modal image of the tissue under investigation.

Step G1) may be performed ex vivo, i. e. outside a patient; for this purpose, the tissue probe may have been resected in a prior step, which may or may not be a part of the method according to the invention. Alternatively, the physical image of the tissue probe may be obtained in vivo, i. e. inside a patient.

Multi-modal microscopic systems and related methods which can be used for simultaneous multi-modal microscopy are disclosed in European patent application EP 20188187.7 and any possible later patent applications deriving priority from said application. The disclosures of these applications with respect to multi-modal microscopic system are incorporated by reference into the present application. Specific details will be explicitly disclosed below, although the inclusion by reference is not limited to these explicit details.

Specifically, when step G1) is performed in vivo, this may be done with a bioptic needle which may form a scan unit as referred to in the aforementioned applications, as will be further explained below. The bioptic needle enables the user to apply the said modalities in-vivo in a back-scatter manner, i. e. the generated signal from the tissue is collected and transported back to the detection unit through said bioptic fiber-optic needle.

Preferably, the method comprises a further step G3) of displaying the digitally stained image on a display device. This digitally stained image resembles images of probes which have been physically stained in one of the above mentioned staining methods. A trained person (in particular a pathologist) can therefore derive properties of the tissue on the basis of his/her experience in interpreting tissues which have been physically stained. For example, the trained person may detect a tumor or disease progression or regression from the displayed image. Furthermore, by combining the above imaging method with spectroscopy, patient responsiveness to therapy may be detected early. Moreover, the dynamic response to a specific therapeutic modality may be visualized.

The display device may be arranged in close proximity of a multi-modal microscopic system employed in the imaging method, or it may be arranged remote from it.

Additionally or alternatively to displaying the digitally stained image on a display device, the interpretation of the digitally stained images can be performed by the same or an additional artificial intelligence system. This artificial intelligence system could also be trained in a manner known as such (but not in the context of digitally stained images).

In a second aspect, the invention also pertains to a training method for training an artificial intelligence system to be used in an imaging method as described above. The training method comprises the steps of
T1) obtaining a multitude of image pairs, each pair comprising
   - a physical image of an unstained biological tissue probe obtained by optical microscopy and
   - a stained image of said probe obtained in a physical staining method,
T2) on the basis of said image pairs, training the artificial intelligence system to predict a digitally stained image, the digitally stained image obtainable by staining the probe in said staining method, from a physical image of said unstained probe.

In the above enumeration, the letter "T" denotes the "training" aspect.

According to the second aspect of the invention, step T1) comprises obtaining the physical image of the unstained probe by simultaneous multi-modal microscopy.

When the artificial intelligence system has been trained in this way, it can be used for generating a digitally stained image of a biological tissue probe from an unstained biological tissue probe in the imaging method explained above.

The physical staining method may be known as such and may be a method employed in a pathologic discipline selected from the group consisting of histology, in particular immunohistology, in particular immunohistochemistry; cytology; serology; microbiology; molecular pathology; clonality analysis; PARR (PCR for Antigen Receptor Rearrangements); and molecular genetics. Histology comprises the H&E (hematoxylin and eosin) method mentioned above. The discipline "molecular pathology" is understood herein as the application of principles, techniques and tools of molecular biology, biochemistry, proteomics and genetics in diagnostic medicine. It includes, inter alia, the methods of immunofluorescence (IF), in situ hybridization (ISH), microRNA (miRNA) analysis, digital pathology imaging, toxicogenomic evaluation, quantitative polymerase chain reaction (qPCR), multiplex PCR, DNA microarray, in situ RNA sequencing, DNA sequencing, antibody based immunofluorescence tissue assays, molecular profiling of pathogens, and analysis of bacterial genes for antimicrobial resistance.

The simultaneous multi-modal microscopy may comprise at least two different modalities selected from the group consisting of two photon excitation fluorescence, two photon autofluorescence, fluorescence lifetime imaging, autofluorescence lifetime imaging, second harmonic generation, third harmonic generation, incoherent/spontaneous Raman scattering, coherent anti-stokes Raman scattering (CARS), broadband or multiplex CARS, stimulated Raman scattering, coherent Raman scattering, stimulated emission depletion (STED), nonlinear absorption, confocal Raman microscope, optical coherence tomography (OCT), single photon/linear fluorescence imaging, bright-field imaging, dark-field imaging, three-photon, four-photon, second harmonic generation, third harmonic generation, and fourth harmonic generation.

The artificial intelligence system may contain at least one neural network, in particular a convolutional neural network, which uses physical images of unstained biological tissue probes as input to provide respective digitally stained images as output. The neural network may transform images in an image space and obtained by multi-modal microscopy into respective images in a feature space, in particular into a vector or a matrix in the feature space. Preferably, the vectors or matrices in the feature space have a lower dimension than the images in the image space. From the image in the feature space, the digitally stained image can obtained.

For example, a neural network may be used that is similar to the one disclosed in Ronneberger et al., U-Net: Convolutional Networks for Biomedical Image Segmentation (available from https://arxiv.org/pdf/1505.04597.pdf). In particular, the neural network may apply one or more of the following principles which are known as such: Data Augmentation, in particular when only few data is available; Down-Sampling and/or Up-Sampling, in particular as disclosed in Ronneberger et al.; and Weighted Loss.

As an alternative to neural networks, it is also conceivable to perform a pixel-wise or region-wise coloring of the images, for example by classification algorithms known as such, for example Random Forrest. However, even though such alternatives are encompassed by the present invention, it is currently assumed that such algorithms are more complex and provide images of a lower quality.

In contrast to the methods known in the prior art, it is possible, in the present invention, to train on images which are not exactly aligned. This may be achieved by a training architecture which preferably differs from an imaging architecture used in the imaging method and may contain at least one neural network component which is only employed for training.

The method may contain an adaption of the method presented in Zhu et al., Unpaired Image-to-Image Translation using Cycle-Consistent Adversarial Networks (available from https://arxiv. org/pdf/1703.10593.pdf), which discloses a Generator-Discriminator Network: In preferred embodiments of the present invention, during training, the transformed images, in this case the digitally stained images, are re-transformed to input images of physically stained probes. In the end, the re-transformed images and the original images should be as identical as possible.

In more detail, the training in step T2) may comprise a first sequence of the steps of
T2.U.1) transforming primary unstained training images in an image space, the unstained primary training images obtained from unstained probes by multi-modal microscopy, into first vectors or matrices in the feature space by a first image-to-feature transformation;
T2.U.2) transforming the first vectors or matrices from the feature space into digitally stained images in the image space by a first feature-to-image transformation;
T2.U.3) transforming the digitally stained images from the image space into second vectors or matrices in the feature space by a second image-to-feature transformation;
T2.U.4) transforming the second vectors or matrices in the features space into secondary unstained images by a second feature-to-image transformation;
T2.U.5) comparing the secondary unstained images with the primary unstained training images;

When the comparison yields a difference outside a predefined range, the transformations and the re-transformation may be modified and steps T2.U.1) to T2.U.4) and optionally T2.U.5) may be re-iterated.

In addition, training may comprise a second sequence of the steps of
T2.S.1) transforming primary stained training images in the image space, the primary stained training images obtained from physically stained probes by multi-modal microscopy, into first vectors or matrices in the feature space by the second image-to-feature transformation;
T2.S.2) transforming the first vectors or matrices from the feature space into digitally unstained images in the image space by the second feature-to-image transformation;
T2.U.3) transforming the digitally unstained images from the image space into second vectors or matrices in the feature space by the first image-to-feature transformation;
T2.U.4) transforming the second vectors or matrices in the features space into secondary stained images by the first feature-to-image transformation;
T2.S.5) comparing the secondary stained images with the primary stained training images.

Here as well, when the comparison yields a difference outside a predefined range, the transformations and the re-transformation may be modified and steps T2.S.1) to T2.S.4) and optionally T2.S.5) may be re-iterated.

In the above enumerations, the letter "U" denotes "unstained" and "S" denotes "stained".

However, the neural networks for transformation and re-transformation are reversed with respect to those disclosed by Zhu et al. The mentioned discriminator takes over the evaluation of the plausibility of the images by comparing the ground truth with the digitally stained images and evaluating them. In contrast to the architectures known from Zhu et al. or from GAN-based Virtual Re-Staining: A Promising Solution for Whole Slide Image Analysis (obtainable from Zhaoyang u et al., https://arxiv.org/pdf/1901.04059.pdf), the input unstained images and the output digitally stained images in the present invention have a different number of modalities. As this would pose a problem for the identity loss, it was adapted to the present invention.

Depending on the quality of the modality images, a pre-processing in the form of denoising and deconvolution may be performed to ensure that the colored images finally meet the desired requirements. This pre-processing may be done by using a self-supervised image denoising neural network, for example a neural network similar to the one described in Kobayashi et al., Image Deconvolution via Noise-Tolerant Self-Supervised Inversion (available from https://arxiv.org/pdf/2006.06156v1. pdf) .

In a further aspect, the invention also relates to a system for generating a digitally stained image of a biological tissue probe and/or for training an artificial intelligence system. The system comprises
- an optical microscopic system for obtaining physical images of biological tissue probes by simultaneous multi-modal microscopy,
   - a data storage for storing a multitude of image pairs, each pair comprising
   - a physical image of a biological tissue probe obtained by optical microscopy and
   - a stained image of said probe obtained in a physical staining method,
- a processing unit for performing
- the imaging method as disclosed above and/or
- the training method as disclosed above.

With this system, the methods described above can be performed.

In this system, an optical microscopic system as disclosed in in European patent application EP 20188187.7 and any possible later patent applications deriving priority from said application may be used. In more detail, the system may comprise at least one first base unit comprising at least one electrical and/or optical base component, at least one scan unit comprising at least one scan component and at least one detection unit comprising at least one detection component. The at least one first base unit may comprise at least two electrical and/or optical base components. The at least one scan unit may comprise at least two scan components. The at least one detection unit may comprise at least two detection component.

The scan unit and/or the detection unit may be freely movable, in particular with six degrees of freedom. The scan unit and/or the detection unit may be connected to the first base unit via at least one flexible connecting line, in particular at least one optical connecting line and/or at least one electric connecting line. The at least one base component, the at least one scan component and the at least one detection component may be operatively coupled to each other such that at least one base component and/or at least one scan component and/or at least one detection component may be jointly and in particular simultaneously useable for more than one modality. In other words, two components of the three units (base unit, scan unit, detection unit) can be used in conjunction with one and the same component or one and the same set of components of one the remaining unit.

In yet another aspect, the invention also relates to a non-transitory storage medium containing instructions that, when executed on a computer, cause the computer to perform a method as explained above.

Detailed embodiments and further advantages of the invention will be explained below and with reference to the following drawings in which
- Figure 1: shows a schematic diagram of the method;
- Figure 2: shows a schematic diagram of a system for performing the method.

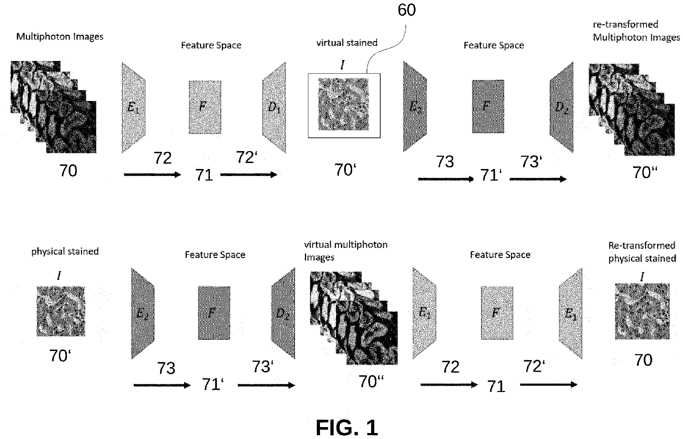

The schematic diagram in Figure 1 shows images 70, 70' in an image space I, feature vectors 71, 71' in a feature space F and transformations 72, 73, 72' and 73' between these images and vectors. According to the invention, the transformations 72, 73, 72' and 73' are obtained by a neural network.

According to the upper half of Figure 1, primary images 70 obtained from unstained probes by multiphoton microscopy are transformed into first vectors 71 in the feature space F by a first image-to-feature transformation 72 (step T2.U.1). By a first feature-to-image transformation 72', the first vectors 71 are transformed to digitally stained images 70' in the image space I (step T2.U.2). In the generating method, these digitally stained images 70' are displayed on a monitor 60. During training, the digitally stained images 70' in the images space I are transformed to second vectors 71' in the feature space F by a second image-to-feature transformation 73 (step T2.U.3). Subsequently, the second vectors 71' are transformed to secondary unstained images 70" by a second feature-to-image transformation 73' (step T2.U.4). The neural network is or has been trained such that the primary unstained image 70 on the left resembles the secondary image 70 on the right (step T2.U.5).

According to the bottom half of Figure 1, primary images 70' obtained from stained probes by multiphoton microscopy are transformed into first vectors 71' in the feature space F by the second image-to-feature transformation 73 (step T2.S.1). By the second feature-to-image transformation 73', the first vectors 71' are transformed to digitally unstained images 70" in the image space I (step T2.S.2). The digitally stained images 70' in the images space I are then transformed to second vectors 71 in the feature space F by the first image-to-feature transformation 72 (step T2.S.3). Subsequently, the second vectors 71' are transformed to secondary stained images by the first feature-to-image transformation (step T2.S.4). The neural network is or has been trained such that the primary stained image 70' on the left resembles the secondary image 70 on the right (step T2.S.5).

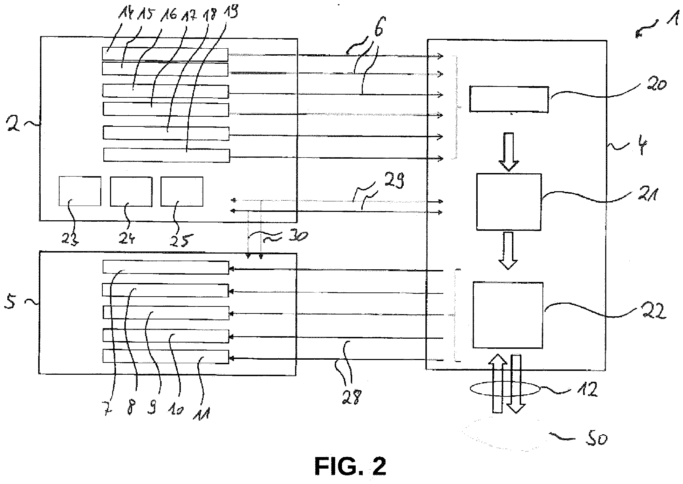

In the embodiment according to Figure 2, a tissue probe 50 (for example a quick section, a cryosection, a fixed section, a fresh section or an entire piece of tissue, e. g. from a punch biopsy) is arranged on a slide (not shown). It is then scanned with a multi-modal microscopic system as disclosed in the above-mentioned European patent application EP 20188187.7.

In more detail, the multimodal microscopic system 1 shown in Figure 2 comprises a first base unit 2 (hereafter referred to as base unit 2), a scan unit 4 and a detection unit 5.

The base unit 2 contains several light sources for different modalities: a laser source 14, a light source 15 for fluorescence imaging, a laser 16 for Raman scattering, a light source 17 for Optical Coherent Tomography (OCT), an amplifier pump laser 18 and a white light source 19. The base unit 2 additionally comprises electronics 23, software 24 and power supplies 25.

The scan unit 4 contains several scan components: a light amplifier 20, transfer/scan optics 21 and an excitation emission filter 22. Each light source 14, 15, 16, 17, 18, 19 is connected to the scan unit 4 via a separate flexible connecting line 6, for example a fiber optic cable. Thus, each of the light sources 14, 15, 16, 17, 18, 19 is operatively connected to one and the same set of scan components 20, 21, 22 so that the different modalities associated with the light sources 14, 15, 16, 17, 18, 19 can be provided with this single set of scan components 20, 21, 22.

The scan unit 4 further includes an objective 12 for directing analysis light to a probe 50. In more detail, the objective 12 is arranged in the scan unit 4 in such a way that a signal emitted from the probe is transmitted back through the objective 12. The filter 22 is arranged such that the signal emitted from the probe 50 is filtered by means of said filter 22. The scan unit 4 is also connected to the base unit 2 via electrical cables 29 which supply the scan unit 4 with power and which control the scan unit 4.

The detection unit 5 is operatively connected with the scan unit 4 and contains several detection components: a filter detector 7, a single photon counter 8, an optical spectrometer 9, an optical power meter 10 and a fluorescence camera 11. Both the scan unit 4 and the detection unit 5 are freely movable in six degrees of freedom. Each detection component 7, 8, 9, 10, 11 is connected to the scan unit 4 via a separate flexible connecting line 28, for example a fiber optic cable. Thus, each detection component 7, 8, 9, 10, 11 is operatively connected to one and the same set of scan components 20, 21, 22 so that the different modalities associated with the detection components 7, 8, 9, 10, 11 can be provided with this single set of scan components 20, 21, 22. Alternatively, the light emitted from light source 17 may be emitted directly onto the probe 50. The detection unit 5 is also connected to the base unit 2 via electrical cables 30 which supply the detection unit 5 with power and which control the detection unit 5.

The system 1 further comprises a switching unit 3 allowing to selectively transmit the signal emitted from the probe 50 to the detection unit 5 depending on the chosen modality.

## Claims

1. An imaging method for generating a digitally stained image (70') of a biological tissue probe (50) from a physical image (70') of an unstained biological tissue probe (50), comprising the steps of
G1) obtaining a physical image (70) of an unstained biological tissue probe (50) by optical microscopy,
G2) generating a digitally stained image (70') from the physical image (70) by using an artificial intelligence system, wherein the system is trained to predict a digitally stained image (70') obtainable by staining the probe (50) in a physical staining method,
**characterized in that**
step G1) comprises obtaining the physical image (70) of the unstained probe (50) by simultaneous multi-modal microscopy.

2. The method as claimed in claim 1,
wherein the method further comprises the step of
G3) displaying the digitally stained image (70') on a display device (60).

3. A training method for training an artificial intelligence system to be used in an imaging method according to any of the preceding claims, comprising the steps of
T1) obtaining a multitude of image pairs (70, 70'), each pair comprising
- a physical image (70) of an unstained biological tissue probe (50) obtained by optical microscopy and
- a stained image (70') of said probe (50) obtained in a physical staining method,
T2) on the basis of said image pairs (70, 70'), training the artificial intelligence system to predict digitally stained images (70'), the digitally stained images (70') obtainable by staining the probe (50) in said staining method, from a physical image (70) of said unstained probe (50),
**characterized in that**
step T1) comprises obtaining the physical image (70) of the unstained probe (50) by simultaneous multi-modal microscopy.

4. The method as claimed in any of the preceding claims,
wherein the physical staining method is a method employed in a pathologic discipline selected from the group consisting of histology, in particular immunohistology, in particular immunohistochemistry; cytology; serology; microbiology; molecular pathology; clonality analysis, PARR (PCR for Antigen Receptor Rearrangements); and molecular genetics.

5. The method as claimed in any of the preceding claims,
wherein the artificial intelligence system contains at least one neural network, in particular a convolutional neural network, which uses physical images (70) of unstained biological tissue probes (50) as input to provide respective digitally stained images (70') as output.

6. The method as claimed in claim 5,
wherein the neural network transforms images (70, 70') in an image space (I) and obtained by multi-modal microscopy into respective images (71, 71') in a feature space (F), in particular into vector (71) or matrices in the feature space (F).

7. The method as claimed in claim 6,
wherein training in step T2) comprises
- a first sequence of the steps of
T2.U.1) transforming primary unstained training images (70) in an image space (I), the unstained primary training images (70) obtained from unstained probes (50) by multi-modal microscopy, into first vectors (71) or matrices in the feature space (F) by a first image-to-feature transformation (72);
T2.U.2) transforming the first vectors (71) or matrices from the feature space (F) into digitally stained images (70') in the image space (I) by a first feature-to-image transformation (72');
T2.U.3) transforming the digitally stained images (70') from the image space (I) into second vectors (71') or matrices in the feature space (F) by a second image-to-feature transformation (73);
T2.U.4) transforming the second vectors (71') or matrices in the features space (F) into secondary unstained images (70") by a second feature-to-image transformation (73');
T2.U.5) comparing the secondary unstained images (70") with the primary unstained training images (70);
- a second sequence of the steps of
T2.S.1) transforming primary stained training images (70') in the image space (I), the primary stained training images (70') obtained from physically stained probes (50) by multi-modal microscopy, into first vectors (71') or matrices in the feature space (F) by the second image-to-feature transformation (73);
T2.S.2) transforming the first vectors (71') or matrices from the feature space (F) into digitally unstained images (70") in the image space (I) by the second feature-to-image transformation (73');
T2.U.3) transforming the digitally unstained images (70") from the image space (I) into second vectors (71) or matrices in the feature space (F) by the first image-to-feature transformation (72);
T2.U.4) transforming the second vectors (71) or matrices in the features space (F) into secondary stained images (70) by the first feature-to-image transformation (72');
T2.S.5) comparing the secondary stained images (70) with the primary stained training images (70').

8. The method as claimed in any of claims 5 to 7,
wherein the neural network comprises
- an imaging architecture for predicting digitally stained images (70') obtainable by staining the probe (50) in a physical staining method and
- a training architecture for training the neural network,
wherein the training architecture differs from the imaging architecture and in particular contains at least one network component which is only employed for training the neural network.

9. The method as claimed in claim 8,
wherein the training architecture comprises a generator-discriminator network.

10. The method as claimed in any of the previous claims,
wherein the input images (70) of unstained probes (50) and the digitally stained images (70') have a different number of modalities.

11. The method as claimed in any of the preceding claims,
wherein simultaneous multi-modal microscopy comprises at least two different modalities selected from the group consisting of two photon excitation fluorescence, two photon autofluorescence, fluorescence lifetime imaging, autofluorescence lifetime imaging, second harmonic generation, third harmonic generation, incoherent/spontaneous Raman scattering, coherent anti-stokes Raman scattering (CARS), broadband or multiplex CARS, stimulated Raman scattering, coherent Raman scattering, stimulated emission depletion (STED), nonlinear absorption, confocal Raman microscope, optical coherence tomography (OCT), single photon/linear fluorescence imaging, bright-field imaging, dark-field imaging, three-photon, four-photon, second harmonic generation, third harmonic generation, and fourth harmonic generation.

12. A system for generating a digitally stained image (70) of a biological tissue probe (50) and/or for training an artificial intelligence system, the system comprising
- an optical microscopic system (1) for obtaining physical images (70) of biological tissue probes (50) by simultaneous multi-modal microscopy,
- a data storage for storing a multitude of image pairs, each pair comprising
- a physical image (70) of an unstained biological tissue probe (50) obtained by simultaneous multi-modal microscopy and
- a stained image (70') of said probe (50) obtained in a physical staining method,
- a processing unit for performing
- the imaging method according to any of claims 1 and 2 and/or
- the training method according to any of claims 3 to 11.

13. A non-transitory storage medium containing instructions that, when executed by a computer, cause the computer to perform a method according to any of claims 1 to 11, in particular in a system as claimed in claim 12.
